# EUROPEAN PATENT SPECIFICATION

(11) **EP 1 715 318 B1**
(45) Date of publication and mention of the grant of the patent: **27.05.2009**
(21) Application number: 05425245.7
(22) Date of filing: 19.04.2005
(51) Int. Cl.: G01L 5/10

(54) **Transducer for measurement of cable tensioning**
Aufnehmer zur Messung einer Kabelspannung
Capteur pour la mesure de la tension d'un câble

(43) Date of publication of application: 25.10.2006
(73) Proprietor: DS Europe S.r.l., 20143 Milano (IT)
(72) Inventor: Piardi, Silvio, 20146 Milano (IT)
(74) Representative: Coggi, Giorgio

(56) References cited:
- WO-A-94/17382
- DE-A1- 2 429 668
- US-A- 3 653 258
- US-A- 3 879 999
- US-A- 4 989 450
- US-B1- 6 209 401
- PATENT ABSTRACTS OF JAPAN vol. 1999, no. 05, 31 May 1999 (1999-05-31) -& JP 11 030558 A (ANZEN MOTOR CAR CO LTD), 2 February 1999 (1999-02-02)

## Description

The present invention refers to a transducer for measurement of cable tensioning, which can be used to measure both the tension already applied to the cable and the tension that is being applied to the cable during tensioning thereof.

The transducer according to the invention further allows measurement of the tension both of a fixed cable and of a cable that is moving with respect to the transducer, such as, for example, the cable of lifting means (cranes, winches, elevators, etc.).

In the present description, the term "cable" will be used to indicate both a conventional cable (having a circular or a non circular section) and a strip, a tape, a belt or other flat-shaped body.

Transducers are also known in the art which, when applied to a cable, allow the tension thereof to be measured, but these are complex and bulky devices whose application to the cable is often complicated and whose installation may require the use of specific auxiliary equipments that are not readily found.

Among the transducers known in the art, transducers (comparable to load cells), which impose on a plurality of cables a non-rectilinear V-shaped path, can be cited by way of example. This type of transducer is extremely bulky and does not allow the tensioning of the individual cables to be known.

Furthermore, transducers are known in which it is possible to measure tensioning even of a single cable, causing the tensioned cable to pass in a non-rectilinear path through three points and thus determining measurable stresses. WO 94/17382 and US3653258 disclose such transducers in which the cable is tensioned by an eccentrically rotating cylinder rotated by a lever arm.

Installation of these transducers on a tensioned cable is not easy, in that it is necessary to use special tools, which are not normally available on the market, to position the cable in the transducer as required to make the measurement. Since a lever action must be exerted to overcome the tensioning effect on the cable, it is essential for the installer to have sufficient space and to be able to use both hands.

The Applicant is not aware of the existence of transducers having characteristics corresponding to those of the present invention.

Object of the present invention is to produce a transducer for measuring tensioning of cables able to overcome the limits presented by the transducers of the prior art; this object is achieved by means of a transducer which has the characteristics illustrated in claim 1.

Further advantageous characteristics of the invention form the subject matter of the dependent claims.

The invention will now be described with reference to exemplary embodiments thereof, in which:
- Figure 1 shows diagrammatically a front view, a side view, a bottom view and a perspective view of a first embodiment of a transducer made according to the invention;
- Figure 2 shows diagrammatically a front view, a side view, a top view and a perspective view of a transducer that differs from that of figure 1 in the arrangement of the safety release pin;
- Figure 3 shows diagrammatically a front view, a side view, a bottom view and a perspective view of a second embodiment of a transducer made according to the invention.

In the appended figures corresponding elements will be identified by the same reference numerals.

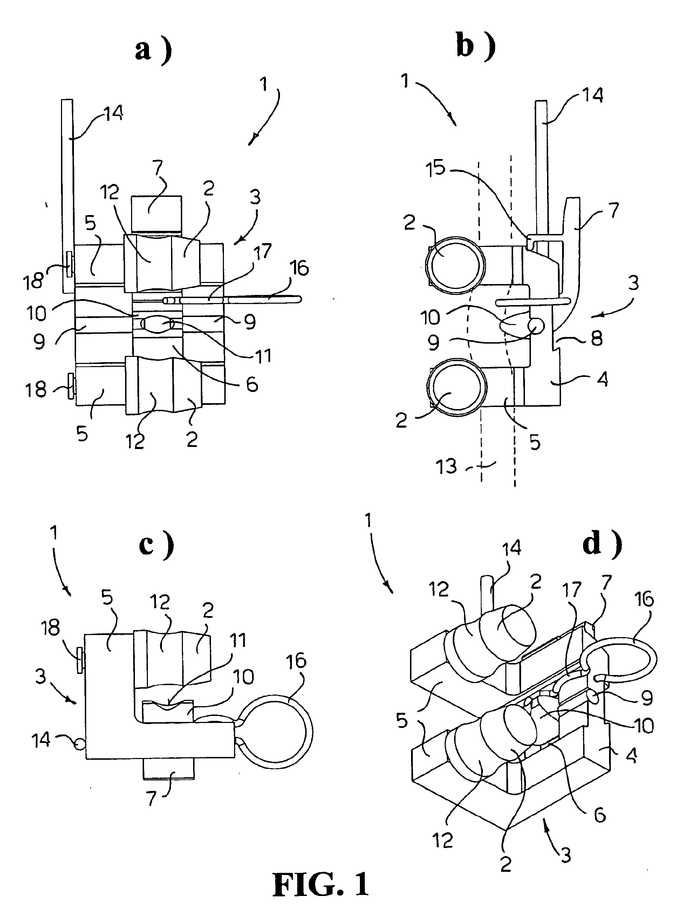

Figure 1 shows diagrammatically a front view (Figure 1a), a side view (Figure 1b), a bottom view (Figure 1c) and a perspective view (Figure 1d) of a first embodiment of a transducer 1 made according to the invention.

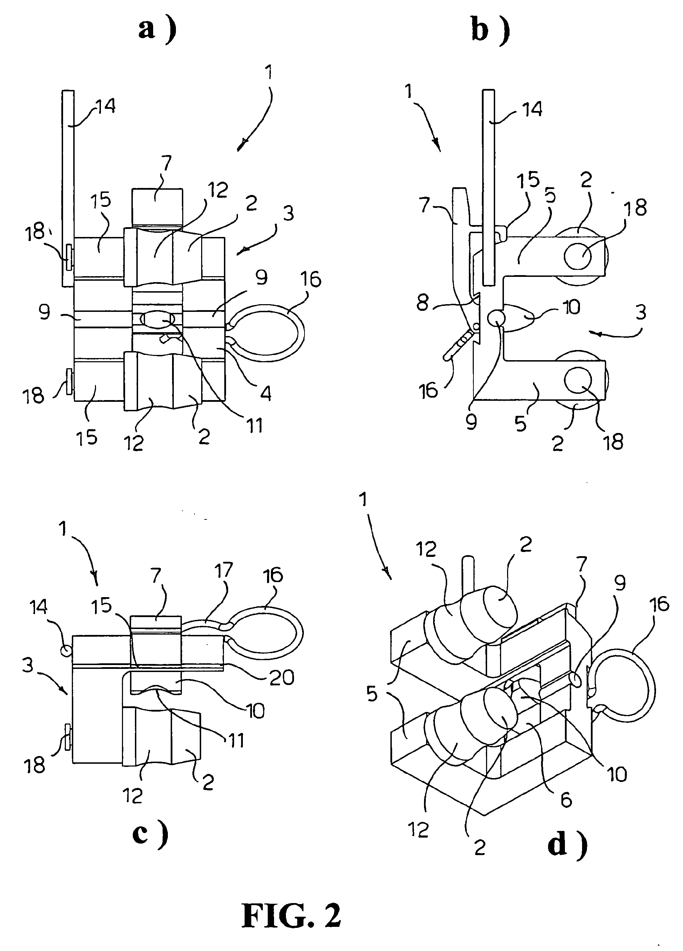

The transducer 1 comprises, in combination with each other, at least:
- a fixed body 3, having a C-shaped profile (Figure 1b) and comprising a central part 4 and a pair of arms 5; in the central part 4 of the fixed body 3 there is a recess 6 (Figures 1a and 1d) in which a moveable element 7 is inserted, whilst in at least one of the areas of the central part 4 situated at the sides of the recess 6 there is a seat 8 (Figure 1b) to which a reduction in the resistant section of the mechanical structure of the transducer, functional to measurement of the stress deriving from the tensioning of the cable, corresponds;
- a pair of transmission elements 2, each of which is held projectingly by one of the arms 5 of the fixed body 3;
- the moveable element 7 is L-shaped (Figure 1b) and able to rotate around an axis 9 situated in two seats (not identified by means of a reference numeral because they are occupied by the axis 9) formed on the side of the arms 5 in the areas of the central part 4 which are situated at the sides of the recess 6; the smaller arm 10 of the moveable element 7 is able to move out of alignment, when in the working position, a cable 13 (indicated with dashed lines in Figure 1b and omitted in the other figures for the sake of simplicity of the graphic representation) resting on the transmission elements 2 and on the end of the arm 10 of the moveable element 7, whilst the other arm of the moveable element 7 is sufficiently long to allow an operator to bring the arm 10 of the element 7 into the working position even with an already tensioned cable, without having to resort to a tool and it is kept in the working position by retaining means consisting, in the embodiment described herein, of an elastic element 15 (Figure 1b) which engages in a seat 20 (Figure 2c) formed in the fixed body 3;
- measuring means placed in the at least one seat 8 of the fixed body 3 and able to measure the deformation induced in the body 3, by means of the transmission elements 2 and of the arm 10 of the moveable element 7 by the cable 13 when it is moved out of alignment by the arm 10 of the element 7; the measuring means (omitted in the appended figures for the sake of simplicity of the graphic representation) preferably consist of linear strain gauges or of other functionally equivalent means, per se known, which will not therefore be described.

The at least one seat 8 is preferably a seat having a swallow-tailed profile and is placed at the centre of at least one of the areas of the central part 4 of the body 3 which are situated at the sides of the recess 6.

The fixed body 3 and the moveable element 7 are formed - primarily for reasons of economy - from sections obtained by extrusion, but without departing from the scope of the invention they may be obtained by working with a machine tool or by casting.

The measuring means can advantageously be connected, by means of the cable 14, to a logic unit (omitted in the appended figures for the sake of simplicity of the graphic representation and not described because it is per se known) able to process the electrical signals generated by the measuring means, to display the tension of the cable 13 thus detected and, possibly, to transmit the measurement read to a remote control unit or to generate an alarm signal or a control and feedback signal (analogical or digital).

The moveable element 7 is preferably held in the working position also by a safety release pin 16 inserted in through holes (not shown in the appended figures) formed in the fixed body 3 and in the moveable element 7 and held in place by a bent portion 17 thereof which engages with the central part 4 of the fixed body 3.

By virtue of the C-shape of the fixed body 3 and of the fact that the transmission elements 2 are mounted projectingly on the ends of the arms 5 of the fixed body 3, the recess delimited by the fixed body 3 and by the transmission elements 2 is open on one side, allowing the cable 13 to be inserted in the transducer 1 (and the transducer 1 to be removed from the cable 13) very easily when the smaller arm 10 of the moveable element 7, in its resting position (that is, rotated 90° with respect to the position in the appended figures), is contained in the recess 6 present in the central part 4 of the fixed body 3.

Furthermore the transmission elements 2 are advantageously provided with pins to be inserted in through holes formed at the end of the arms 5 and fixed therein by means of reversible fixing means 18 (for example, by means of snap rings) so as to be able to be easily removed and replaced: this allows the transmission elements 2 to be adapted to the characteristics (shape, size, etc.) of the cable to be controlled by mounting on the ends of the arms 5 transmission elements 2 having an outer profile complementary to that of the cable 13.

Using transmission elements 2 having different diameters, without changing the shape and the dimensions of the semicircular grooves 12, the position of the points of contact of the cable 13 with the transmission elements 2 is changed with respect to the point of contact of said cable with the arm 10, thus changing the field of measurement of the transducer and making it compatible with tensioning values of the cable that are different from each other (larger or smaller), without having to change the dimensions of the fixed body 3 and of the moveable element 7. The change in the field of measurement of the transducer can further be obtained by changing the position of the axis 9 and, consequently, that of the at least one seat 8.

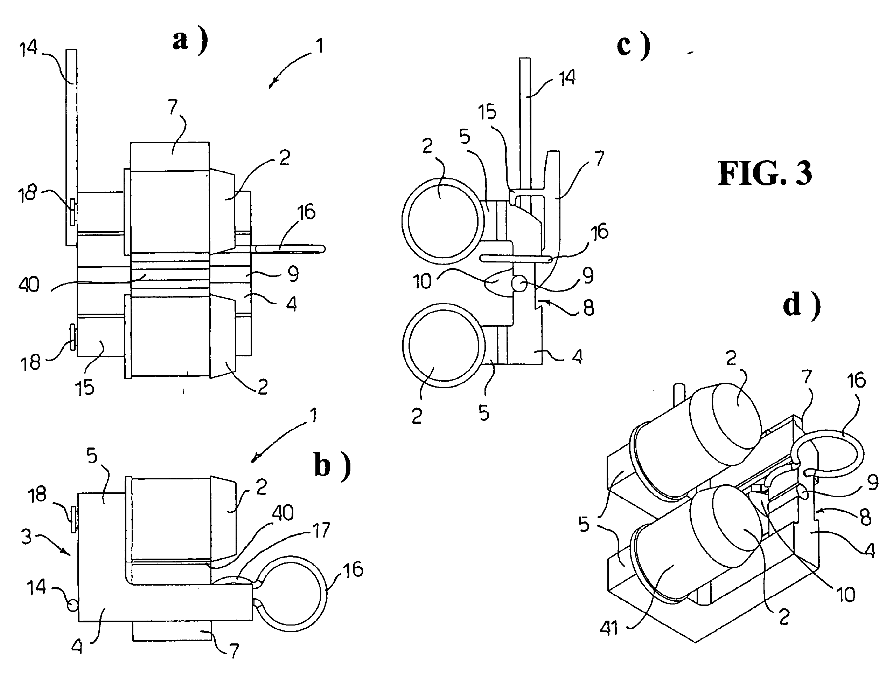

Similarly, it is possible to intervene on the diameter of the cylindrical transmission elements 2 shown in Figure 3 to adjust the measurement field of the transducer 1 to different tensioning of the cable.

Purely by way of example it should be observed that in the embodiment shown in Figures 1 and 2, the transmission elements 2 have semicircular grooves 12 able to receive a (substantially) cylindrical cable, whilst in the embodiment shown in Figure 3 the transmission elements 2 have a cylindrical shape suitable to receive a (substantially) flat cable.

Furthermore, the transmission elements 2 can be made rotatable with respect to the relative pins (for example through interposition of ball bearings or of other rolling means) to allow the transducer 1 to be applied also to cables in relative movement with respect to the transducer 1.

The arm 10 of the moveable element 7 advantageously has a cam profile able to move the cable progressively out of alignment during setting up thereof so as to reduce the effort required to the operator and so as not to stress the fixed body 3 beyond its limit of elastic deformation and the end of the arm 10 has an outer profile complementary to that of the cable 13; in the embodiment shown in Figures 1 and 2 the end of the arm 10 of the moveable element 7 has a semicircular groove 11 similar to the semicircular grooves 12 of the transmission elements 2, whilst in the embodiment shown in Figure 3 the end of the arm 10 of the moveable element 7 has a rounded surface 40.

To allow the transducer 1 to be applied also to cables in movement, the groove 11 present in the end of the arm 10 can be made in the sleeve of a cylindrical body rotatable around an axis, at right angles to the direction of travel of the cable, carried on the end of the arm 10 of the moveable element 7.

The dimensions of the transmission elements 2 at the grooves 12 and those of the end of the arm 10 of the moveable element 7 at the groove 11 are such as not to stress the cable 13 in such a limited area as to cause permanent deformations and/or damages thereof. Furthermore, the semicircular shape of the semicircular groves 11 and 12 (Figures 1 and 2) is such as make the position of the cable certain when the transducer 1 is applied thereto, thus making certain the distribution of stresses within the fixed body 3.

The transducer 1 of the present invention can be applied fixedly to the cable 13, so as to form a permanent element controlling the tension of the cable 13, or temporarily, as needed or at pre-established intervals, to control the correct tensioning of the cable.

Figure 2 shows diagrammatically a front view, a side view, a bottom view and a perspective view of a transducer 1 which differs from that of Figure 1 in the arrangement of the release pin 16 which, instead of being inserted in the through holes formed in the fixed body 3 and in the moveable element 7, is inserted only in the through hole formed in the moveable element 7 and rests against the bottom wall of the at least one seat 8 of the fixed body 3 and is held in place by a bent portion 17 thereof which engages with the central part 4) of the fixed body 3.

Figure 3 shows diagrammatically a front view, a side view, a bottom view and a perspective view of a second embodiment of a transducer 1 made according to the invention, which differs from that shown in Figures 1 or 2 essentially in that it is designed to measure tensioning of a flat cable.

For this purpose the transmission elements 2 are cylindrical in shape and the end of the smaller arm 10 of the moveable element 7 has a rounded surface 40 able to receive a (substantially) flat cable. The transmission elements 2 have side shoulders which determine a certain positioning of the cable with respect to the axis of the transmission 2, thus causing a certain distribution of the stresses inside the fixed body 3.
To allow the transducer 1 to be applied to a flat cable in movement the transmission elements 2 can be made rotatable with respective to the relative pins and the rounded surface 40 can be equipped with rolling means (for example with rotatable rollers), not shown in Figure 3 for simplicity of the graphic representation.

Without departing from the scope of the invention as defined in the appended claims, a person skilled in the art can make to the transducer previously described changes and improvements suggested by normal experience and/or the evolution of the art.

## Claims

1. A transducer (1) for measuring the tensioning of cables (13), comprising in combination with each other, at least:
- a fixed body (3), having a C-shaped profile and comprising a central part (4) and a pair of arms (5), the central part (4) of the fixed body (3) having a recess (6) in which a L-shaped moveable element (7) is inserted, a seat (8) being formed in at least one of the areas of the central part (4) situated at the sides of the recess (6), which constitutes a localised reduction of the resistant section of the mechanical structure of the fixed body (3);
- a pair of transmission elements (2), each of which is held projectingly by one of the arms (5) of the fixed body (3);
- the L-shaped moveable element (7), able to rotate around an axis (9) situated in two seats formed, on the side of the arms (5) of the fixed body (3), in the areas of the central part (4) situated at the sides of the recess (6) comprises a smaller arm (10) by which the cable (13) is moved out of alignment when said movable element (7) is in the working position and a longer arm;
- measuring means, situated in the at least one seat (8) of the fixed body (3) and able to measure the deformation induced in the fixed body (3) by a cable (13) resting on the transmission elements (2) and on the end of said smaller arm (10) of the moveable element (7) and moved out of alignment by said smaller arm (10) when the moveable element (7) is in the working position; whereby said longer ann of the moveable element (7)
- is sufficiently long to allow an operator to bring said longer arm into the working position even with an already tensioned cable, without having to resort to a tool, and
- is kept in the working position by retaining means consisting of an elastic element (15), placed at the end of said longer arm, which engages in a seat (20) formed in the fixed body (3).

2. A transducer (1) according to claim 1, **characterised in that** the smaller arm (10) of the moveable element (7) has a cam profile able to progressively move the cable (13) out of alignment during the setting up of the moveable element (7), to reduce the effort required to the operator and not to stress the fixed body (3) beyond its limit of elastic deformation.

3. A transducer (1) according to claim 1, **characterised in that** it further comprises a release pin (16) able to retain the moveable element (7) in the working position.

4. A transducer (1) according to claim 3, **characterised in that** the release pin (16) is inserted in through holes formed in the fixed body (3) and in the moveable element (7) and is held in place by a bent portion (17) thereof which engages with the central part (4) of the fixed body (3).

5. A transducer (1) according to claim 3, **characterised in that** the release pin (16) is inserted in a through hole formed in the moveable element (7), rests against the bottom wall of the at least one seat (8) of the fixed body (3) and is held in place by a bent portion (17) thereof which engages with the central part (4) of the fixed body (3).

6. A transducer (1) according to claim 1, **characterised in that** the measuring means consist of linear stress gauges or of another element able to measure deformations inside the fixed body (3).

7. A transducer (1) according to claim 1, **characterised in that** the measuring means are connected, by means of a cable (14), to a logic unit able to process the electrical signals generated by the measuring means and to display the tension of the cable (13).

8. A transducer (1) according to claim 1, **characterised in that** the transmission elements (2) are provided with pins for insertion in through holes formed at the ends of the arms (5) of the fixed body (3) and fixed therein by means of reversible fixing means (18).

9. A transducer (1) according to claim 8, **characterised in that** the transmission elements (2) are rotatable with respect to the relative pins.

10. A transducer (1) according to claim 1, **characterised in that** the transmission elements (2) and the end of the arm (10) of the moveable element (7) have a profile complementary to that of the cable (13).

11. A transducer (1) according to claim 10, **characterised in that** the transmission elements (2) and the end of the arm (10) of the moveable element (7) have semicircular grooves (12 and 11, respectively).

12. A transducer (1) according to claim 11 **characterised in that** the semicircular groove (11) which is present at the end of the arm (10) of the moveable element (7) is formed in the sleeve of a cylindrical body, rotatable around an axis at right angles to the direction of travel of the cable, carried by the end of the arm (10) of the moveable element (7).

13. A transducer (1) according to claim 10, **characterised in that** the transmission elements (2) are cylindrical in shape and **in that** the end of the arm (10) of the moveable element (7) has a rounded surface (40).

14. A transducer (1) according to claim 16, **characterised in that** the rounded surface (40) is equipped with rolling means.

## Patentansprüche

1. Aufnehmer (1) zur Messung der Spannung von Kabeln (13), umfassend in Kombination miteinander mindestens:
- einen festen Körper (3) mit einem C-förmigen Profil und umfassend ein mittleres Teil (4) und zwei Arme (5), wobei das mittlere Teil (4) des festen Körpers (3) eine Ausnehmung (6) aufweist, in die ein L-förmiges, bewegliches Element (7) eingesetzt ist, wobei ein Sitz (8) in mindestens einer der Flächen des mittleren Teils (4) gebildet ist, die sich an den Seiten der Ausnehmung (6) befinden, der eine örtliche Verringerung des Widerstandsabschnitts der mechanischen Struktur des festen Körpers (3) darstellt;
- zwei Übertragungselemente (2), von welchen jedes vorstehend von einem der Arme (5) des festen Körpers (3) getragen wird;
- wobei das L-förmige bewegliche Element (7), das um eine Achse (9) drehen kann, die in zwei Sitzen positioniert ist, die an der Seite der Arme (5) des festen Körpers (3) in den Flächen des mittleren Teils (4) gebildet sind, die sich an den Seiten der Ausnehmung (6) befinden, einen kleineren Arm (10) umfasst, durch den das Kabel (13) aus der Ausrichtung bewegt wird, wenn sich das bewegliche Element (7) in der Arbeitsposition befindet, sowie einen längeren Arm;
- ein Messmittel, das in dem mindestens einen Sitz (8) des festen Körpers (3) positioniert ist und die Verformung messen kann, die in dem festen Körper (3) durch ein Kabel (13) hervorgerufen wird, das auf den Übertragungselementen (2) und auf einem Ende des kleineren Arms (10) des beweglichen Element (7) liegt und durch den kleineren Arm (10) aus der Ausrichtung bewegt wird, wenn sich das bewegliche Element (7) in der Arbeitsposition befindet;
wobei der längere Arm des beweglichen Elements (7)
- ausreichend lange ist, so dass ein Bediener den längeren Arm in die Arbeitsposition bringen kann, selbst wenn ein Kabel bereits gespannt ist, ohne ein Werkzeug benützen zu müssen, und
- in der Arbeitsposition durch Rückhaltemittel gehalten wird, die aus einem elastischen Element (15) bestehen, das an dem Ende des längeren Arms angeordnet ist, das in einen Sitz (20) eingreift, der in dem festen Körper (3) gebildet ist.

2. Aufnehmer (1) nach Anspruch 1, **dadurch gekennzeichnet, dass** der kleinere Arm (10) des beweglichen Elements (7) ein Nockenprofil hat, das imstande ist, das Kabel (13) während der Einstellung des beweglichen Elements (7) zunehmend aus der Ausrichtung zu bewegen, um die Anstrengung zu verringern, die der Bediener aufbringen muss, und um den festen Körper (3) nicht über seine Grenze einer elastischen Verformung hinaus zu belasten.

3. Aufnehmer (1) nach Anspruch 1, **dadurch gekennzeichnet, dass** er des Weiteren einen Freigabestift (16) umfasst, der imstande ist, das bewegliche Element (7) in der Arbeitsposition zu halten.

4. Aufnehmer (1) nach Anspruch 3, **dadurch gekennzeichnet, dass** der Freigabestift (16) in Durchgangslöcher eingesetzt ist, die in dem festen Körper (3) und in dem beweglichen Element (7) gebildet sind, und durch einen gekrümmten Abschnitt (17) in Position gehalten wird, der in das mittlere Teil (4) des festen Körpers (3) eingreift.

5. Aufnehmer (1) nach Anspruch 3, **dadurch gekennzeichnet, dass** der Freigabestift (16) in ein Durchgangsloch eingesetzt ist, das in dem beweglichen Element (7) gebildet ist, gegen die Bodenwand des mindestens einen Sitzes (8) des festen Körpers liegt, und durch einen gekrümmten Abschnitt (17) in Position gehalten wird, der in das mittlere Teil (4) des festen Körpers (3) eingreift.

6. Aufnehmer (1) nach Anspruch 1, **dadurch gekennzeichnet, dass** das Messmittel aus Linear-Verformungsmessgeräten oder aus einem anderen Element besteht, das imstande ist, die Verformung innerhalb des festen Körpers (3) zu messen.

7. Aufnehmer (1) nach Anspruch 1, **dadurch gekennzeichnet, dass** das Messmittel mit Hilfe eines Kabels (14) mit einer Logikeinheit verbunden ist, die die elektrischen Signale verarbeiten kann, die von dem Messmittel erzeugt werden, und die Spannung des Kabels (13) anzeigen kann.

8. Aufnehmer (1) nach Anspruch 1, **dadurch gekennzeichnet, dass** die Übertragungselemente (2) mit Stiften zum Einsetzen in Durchgangslöcher bereitgestellt sind, die an den Enden der Arme (5) des festen Körpers (3) gebildet und mit Hilfe eines reversiblen Befestigungsmittels (18) darin befestigt sind.

9. Aufnehmer (1) nach Anspruch 8, **dadurch gekennzeichnet, dass** die Übertragungselemente (2) in Bezug auf die jeweiligen Stiften drehbar sind.

10. Aufnehmer (1) nach Anspruch 1, **dadurch gekennzeichnet, dass** die Übertragungselemente (2) und das Ende des Arms (10) des beweglichen Elements (7) ein Profil aufweisen, das zu jenem des Kabels (13) komplementär ist.

11. Aufnehmer (1) nach Anspruch 10, **dadurch gekennzeichnet, dass** die Übertragungselemente (2) und das Ende des Arms (10) des beweglichen Elements (7) halbkreisförmige Rillen (12 beziehungsweise 11) aufweisen.

12. Aufnehmer (1) nach Anspruch 11, **dadurch gekennzeichnet, dass** die halbkreisförmige Rille (11), die am Ende des Arms (10) des beweglichen Elements (7) vorhanden ist, in der Hülse eines zylindrischen Körpers gebildet ist, der um eine Achse in rechten Winkeln zu der Bewegungsrichtung des Kabels drehbar ist, das von dem Ende des Arms (10) des beweglichen Elements (7) getragen wird.

13. Aufnehmer (1) nach Anspruch 10, **dadurch gekennzeichnet, dass** die Übertragungselemente (2) eine zylindrische Form aufweisen und das Ende des Arms (10) des beweglichen Elements (7) eine abgerundete Oberfläche (40) hat.

14. Aufnehmer (1) nach Anspruch 13, **dadurch gekennzeichnet, dass** die abgerundete Oberfläche (40) mit einem Walzenmittel ausgestattet ist.

## Revendications

1. Capteur (1) pour la mesure de la tension de câbles (13), comprenant en combinaison les uns avec les autres, au moins :
- un corps fixe (3), ayant un profilé en forme de C et comprenant une partie centrale (4) et une paire de bras (5), la partie centrale (4) du corps fixe (3) ayant une cavité (6) dans laquelle un élément déplaçable en forme de L (7) est inséré, un siège (8) étant formé dans au moins une des zones de la partie centrale (4) située au niveau des côtés de la cavité (6), qui constitue une réduction localisée de la section résistante de la structure mécanique du corps fixe (3) ;
- une paire d'éléments de transmission (2), dont chacun est maintenu de manière à se projeter par un des bras (5) du corps fixe (3) ;
- l'élément déplaçable en forme de L (7), apte à entrer en rotation autour d'un axe (9) situé dans deux sièges formés sur le côté des bras (5) du corps fixe (3), dans les zones de la partie centrale (4) situées au niveau des côtés de la cavité (6) comprend un bras (10) plus petit par lequel le câble (13) est désaligné lorsque ledit élément déplaçable (7) est dans la position de travail et un bras plus long ;
- un moyen de mesure, situé dans au moins un siège (8) du corps fixe (3) et apte à mesurer la déformation induite dans le corps fixe (3) par un câble (13) reposant sur les éléments de transmission (2) et à l'extrémité dudit bras plus petit (10) de l'élément déplaçable (7) et désaligné par ledit bras plus petit (10) quand l'élément déplaçable (7) est dans la position de travail ;
moyennant quoi ledit bras plus long de l'élément déplaçable (7)
- est suffisamment long pour permettre à un opérateur d'amener ledit bras plus long dans la position de travail même avec un câble déjà tendu, sans devoir se servir d'un outil, et
- est gardé dans la position de travail par un moyen de rétention constitué d'un élément élastique (15) placé à l'extrémité dudit bras plus long, qui vient en prise avec un siège (20) formé dans le corps fixe (3).

2. Capteur (1) selon la revendication 1, **caractérisé en ce que** le bras plus petit (10) de l'élément déplaçable (7) possède un profil de came apte à désaligner progressivement le câble (13) pendant l'installation de l'élément déplaçable (7), afin de réduire l'effort requis de l'opérateur et de ne pas contraindre le corps fixe (3) au-delà de ses limites de déformation élastique.

3. Capteur (1) selon la revendication 1, **caractérisé en ce que** il comprend en outre une goupille de déverrouillage (16) apte à retenir l'élément déplaçable (7) dans la position de travail.

4. Capteur (1) selon la revendication 3, **caractérisé en ce que** la goupille de déverrouillage (16) est insérée dans des alésages traversants formés dans le corps fixe (3) et dans l'élément déplaçable (7) et est maintenue en place par une portion courbe (17) de celui-ci qui vient en prise avec la partie centrale (4) du corps fixe (3).

5. Capteur selon la revendication 3, **caractérisé en ce que** la goupille de déverrouillage (16) est insérée dans un alésage traversant formé dans l'élément déplaçable (7), repose contre la paroi de fond d'au moins un siège (8) du corps fixe (3) et est maintenue en place par une portion courbe (17) de celui-ci qui vient en prise avec la partie centrale (4) du corps fixe (3).

6. Capteur (1) selon la revendication 1, **caractérisé en ce que** le moyen de mesure consiste en des jauges de contrainte linéaire ou en un autre élément apte à mesurer des déformations à l'intérieur du corps fixe (3).

7. Capteur (1) selon la revendication 1, **caractérisé en ce que** le moyen de mesure est connecté, au moyen d'un câble (14), à une unité logique apte à traiter les signaux électriques générés par le moyen de mesure et à afficher la tension du câble (13).

8. Capteur (1) selon la revendication 1, **caractérisé en ce que** les éléments de transmission (2) sont pourvus de goupilles à insérer dans les alésages traversants formés aux extrémités des bras (5) du corps fixe (3) et fixées dans celui-ci au moyen de moyens de fixation réversibles (18).

9. Capteur (1) selon la revendication 8, **caractérisé en ce que** les éléments de transmission (2) peuvent être tournés par rapport aux goupilles relatives.

10. Capteur (1) selon la revendication 1, **caractérisé en ce que** les éléments de transmission (2) et l'extrémité du bras (10) de l'élément déplaçable (7) possèdent un profil complémentaire de celui du câble (13).

11. Capteur (1) selon la revendication 10, **caractérisé en ce que** les éléments de transmission (2) et l'extrémité du bras (10) de l'élément déplaçable (7) possèdent des gorges semi-circulaires (12 et 11, respectivement).

12. Capteur (1) selon la revendication 11, **caractérisé en ce que** la gorge semi-circulaire (11) qui est présente à l'extrémité du bras (10) de l'élément déplaçable (7) est formée dans le manchon d'un corps cylindrique, pouvant entrer en rotation autour d'un axe à angle droit par rapport à la direction de course du câble, supporté par l'extrémité du bras (10) de l'élément déplaçable (7).

13. Capteur (1) selon la revendication 10, **caractérisé en ce que** les éléments de transmission (2) sont de forme cylindrique et **en ce que** l'extrémité du bras (10) de l'élément déplaçable (7) possède une surface arrondie (40).

14. Capteur (1) selon la revendication 16, **caractérisé en ce que** la surface arrondie (40) est équipée de moyens de roulement.
